# EUROPÄISCHE PATENTANMELDUNG

(11) **EP 3 029 514 A1**
(43) Veröffentlichungstag der Anmeldung: **08.06.2016**
(21) Anmeldenummer: 15177450.2
(22) Anmeldetag: 20.07.2015
(51) Int. Cl.: G02F 1/1333, G09F 9/35

(54) **ZWEISEITIGE INTEGRIERTE FLÜSSIGKRISTALL-ANZEIGEVORRICHTUNG**

(30) Priorität: 04.12.2014 DE 102014224855
(71) Anmelder: SBF Spezialleuchten GmbH, 04316 Leipzig (DE)
(72) Erfinder: Czekay, Dietmar, 04177 Leipzig (DE)
(74) Vertreter: Platzöder, Michael Christian

(57) **Zusammenfassung**

Anzeigevorrichtung (1), insbesondere Bildschirm zur Informationsanzeige in einem Personentransportmittel, aufweisend ein Anzeigemodul (4) mit einer flächenförmigen Lichtquelle (10) mit einer ersten Oberfläche und einer zweiten, der ersten Oberfläche gegenüberliegenden Oberfläche, wobei die Lichtquelle (10) eingerichtet ist, sowohl an der ersten Oberfläche als auch an der zweiten Oberfläche Licht zu emittieren; einem ersten Flüssigkristall-Anzeigeelement (14a), das auf der Seite der ersten Oberfläche der Lichtquelle (10) so angeordnet ist, dass das von der ersten Oberfläche emittierte Licht als Hintergrundbeleuchtung des ersten Flüssigkristall-Anzeigeelements (14a) dient; und einem zweiten Flüssigkristall-Anzeigeelement (14b), das auf der Seite der zweiten Oberfläche der Lichtquelle (10) so angeordnet ist, dass das von der zweiten Oberfläche emittierte Licht als Hintergrundbeleuchtung des zweiten Flüssigkristall-Anzeigeelements (14b) dient; Datenempfangsmitteln (15) zum Empfang von mittels wenigstens eines der Flüssigkristall-Anzeigeelemente (14a, 14b) anzuzeigenden Informationen oder von Steuerdaten oder beidem; ein erstes lichtdurchlässiges Substrat (2); und ein zweites lichtdurchlässiges Substrat (3); wobei das erste Substrat (2) und das zweite Substrat (3) so miteinander verbunden sind, dass das Anzeigemodul (4) dazwischen in einem Hohlraum (5) angeordnet ist.

## Beschreibung

Die vorliegende Erfindung betrifft eine Anzeigevorrichtung, insbesondere einen Bildschirm zur Informationsanzeige in einem Personentransportmittel wie etwa einem Schienenfahrzeug, sowie ein Personentransportmittel mit einer solchen Anzeigevorrichtung.

Anzeigevorrichtungen, wie beispielsweise Anzeigetafeln oder Monitore, werden heutzutage in einer Vielzahl von Anwendungen eingesetzt, insbesondere zur statischen Anzeige von Informationen, auch von Werbung. So ist es bekannt, beleuchtete Werbetafeln mit einer Lichtkammer auszustatten, die eine gleichmäßig leuchtende Oberfläche bereitstellt, auf der dann eine Folie oder ein Plakat aufgezogen werden, auf der bzw. dem die darzustellende Information beispielsweise mittels eines Druckverfahrens aufgebracht ist. Auf diese Weise lassen sich günstig statische Anzeigen realisieren.

Für dynamische Anzeigen werden dagegen meist Monitore eingesetzt, die über entsprechende Bildsignale und wahlweise auch Tonsignale angesteuert werden, und dynamisch verschiedene Anzeigen oder gar Videos wiedergeben können. Insbesondere sind dafür Monitore auf Basis der sogenannten Flüssigkristallanzeigen (Liquid Crystal Display, LCD) weitverbreitet. Bei einer Anwendung finden sich solche Monitore in Personentransportmitteln, insbesondere in Personenzügen, um dort Informationen für die Fahrgäste anzuzeigen. Beispielhaft können dies Informationen zum Fahrplan, zur Zuggeschwindigkeit, zur Fahrstrecke und noch verbleibenden Entfernungen, zur Uhrzeit, zu Umsteigemöglichkeiten an einem bestimmten Bahnhof o.ä. sein. Auch Werbung, wie etwa Sonderangebote des Bahnbetreibers, wird dabei häufig als Information zur Verfügung gestellt. Insbesondere kann bei der dynamischen Anzeige auch eine Schleife, d.h. eine wiederholte Anzeige einer bestimmten Serie einzelner Anzeigen bzw. Informationen, vorgesehen sein. Um gut sichtbar zu sein, werden solche Monitore, die heutzutage meist nicht mehr als Röhrenbildschirm (Cathode Ray Tube, CRT), sondern als Flachbildschirm (Flat Panel Display, FPD, insbesondere LCD) ausgeführt sind, an gut zugänglichen Stellen, wie etwa an Wänden oder in Gängen montiert. Speziell in Massenpersonentransportmitteln, wie etwa Schienenfahrzeugen (z.B. Zügen), ist dies häufig eine Wand eines Passagierbereichs, etwa eines Zugwaggons, die sich in unmittelbarer Nähe zu einem Passagierweg, etwa einem Zustieg oder einem Gang, befindet. Die Lichtausstrahlung des Monitors erfolgt dann in den Raumbereich vor dem Bildschirm an seiner Vorderseite, während seine Rückseite der Wand zugewandt ist. Analog werden Werbe- bzw. Informationsmonitore auch in anderen Anwendungen häufig an stark frequentierten Stellen, etwa in Einkaufspassagen oder in Verkaufsflächen, aufgestellt. Selbst bei den heutigen Flachbildschirmen ergibt sich dadurch in der Regel ein Aufbau auf der Wand oder auf einer Halterung, der dieser gegenüber vorspringt und ein Hindernis darstellen, jedenfalls aber den verfügbaren Raum davor einschränken kann. Auch besteht die Gefahr, dass eine solche exponierte Anordnung leicht zu Beschädigungen des Monitors führen kann, wenn etwa vorbeigehende Passanten bzw. Passagiere daran anstoßen. Letzteres kann umgekehrt auch zu Verletzungen von Personen oder zur Beschädigung von durch diese mitgeführten Gegenständen oder von deren Kleidung führen. Die anzuzeigende Information ist zudem nur von Standpunkten innerhalb eines Sichtbereichs ablesbar, die sich im Wesentlichen in einem begrenzten Raumwinkel vor der Wand und dem Bildschirm der Anzeigevorrichtung befinden.

Vor diesem Hintergrund liegt der vorliegenden Erfindung die Aufgabe zugrunde, eine verbesserte, robuste und platzsparend installierbare Anzeigevorrichtung mit erweitertem Sichtbereich zu schaffen.

Eine Lösung dieser Aufgabe wird gemäß der Lehre der unabhängigen Ansprüche erreicht durch eine Anzeigevorrichtung, insbesondere einen Bildschirm zur Informationsanzeige in einem Massentransportmittel, gemäß Anspruch 1, sowie mit einem Massentransportmittel, insbesondere Zug-Waggon, gemäß Anspruch 14 mit einer derartigen Anzeigevorrichtung.

Verschiedene Ausführungsformen und Weiterbildung der Erfindung sind Gegenstand der Unteransprüche.

Ein erster Aspekt der Erfindung betrifft eine Anzeigevorrichtung, insbesondere einen Bildschirm zur Informationsanzeige in einem Personentransportmittel. Die Anzeigevorrichtung weist ein Anzeigemodul und dieses wiederum eine flächenförmige Lichtquelle mit einer ersten Oberfläche und einer zweiten, der ersten Oberfläche gegenüberliegenden Oberfläche, auf. Dabei ist die Lichtquelle eingerichtet, sowohl an der ersten Oberfläche als auch an der zweiten Oberfläche Licht zu emittieren. Des Weiteren weist das Anzeigemodul auf: ein erstes Flüssigkristall-Anzeigeelement, das auf der Seite der ersten Oberfläche der Lichtquelle so angeordnet ist, dass das von der ersten Oberfläche emittierte Licht als Hintergrundbeleuchtung des ersten Flüssigkristall-Anzeigeelements dient, sowie ein zweiten Flüssigkristall-Anzeigeelement, das auf der Seite der zweiten Oberfläche der Lichtquelle so angeordnet ist, dass das von der zweiten Oberfläche emittierte Licht als Hintergrundbeleuchtung des zweiten Flüssigkristall-Anzeigeelements dient. Daneben weist das Anzeigemodul noch Datenempfangsmittel zum Empfang von mittels wenigstens eines der Flüssigkristall-Anzeigeelemente anzuzeigenden Informationen oder von Steuerdaten oder beidem, sowie ein erstes lichtdurchlässiges Substrat und ein zweites lichtdurchlässiges Substrat auf. Dabei sind das erste Substrat und das zweite Substrat so miteinander verbunden, dass das Anzeigemodul dazwischen in einem Hohlraum angeordnet ist.

Unter einem "Personentransportmittel" im Sinne der Erfindung ist dabei jede Art von Transportvorrichtung zu verstehen, die zur Beförderung von Personen, insbesondere einer Vielzahl von Personen bestimmt oder jedenfalls geeignet ist. Insbesondere sind Massentransportmittel wie Züge bzw. einzelne Waggons davon, Flugzeuge und Schiffe sowie Busse und ähnliche Kraftfahrzeuge jeweils Personentransportmittel im Sinne der Erfindung.

Unter einem "Anzeigemodul" im Sinne der Erfindung ist jede Art von technischer Vorrichtung zu verstehen, die dazu vorgesehen und eingerichtet ist, Informationen, insbesondere Text- und/oder Bildinformationen für den menschlichen Betrachter anzuzeigen. Insbesondere sind Bildschirme jeder Art, wie etwa CRT-Bildschirme, FPD-Bildschirme, wie etwa LCD oder LED-Bildschirme jeweils Anzeigemodule im Sinne der Erfindung. Die anzuzeigenden Informationen können dabei insbesondere durch entsprechende Signale an das Anzeigemodul übermittelt werden oder aber dort bereits in Form von Daten gespeichert oder gar in Form vorgefertigter Anzeigen vorhanden sein, die insbesondere über entsprechende, von der Datenempfangseinrichtung empfangene Steuerdaten zur Anzeige ausgewählt werden können.

Unter einem "Flüssigkristall-Anzeigeelement" ist eine Anzeigevorrichtung zu verstehen, deren Funktion darauf beruht, dass Flüssigkristalle die Polarisationsrichtung von Licht beeinflussen, wenn ein bestimmtes Maß an elektrischer Spannung angelegt wird. Die Anzeigevorrichtung weist in der Regel eine Mehrzahl von Segmenten auf, die jeweils eine Flüssigkristallschicht enthalten und unabhängig voneinander ihre Transparenz ändern können. Dazu wird mit elektrischer Spannung in jedem Segment die Ausrichtung der Flüssigkristalle gesteuert, wodurch sich die Durchlässigkeit für polarisiertes Licht, das mit einer Hintergrundbeleuchtung und Polarisationsfiltern erzeugt wird, ändert, so dass die Helligkeit jedes Segments mittels der elektrischen Spannung gesteuert werden kann. Das Flüssigkristall-Anzeigeelement kann somit als Modulationsvorrichtung für von der Hintergrundbeleuchtung ausgesandtes Licht wirken. Die Hintergrundbeleuchtung kann insbesondere mittels einer oder mehrerer Leuchtdioden (LED) erfolgen. Ein solcher LCD-Bildschirmtyp wird meist als "LED-Bildschirm" bezeichnet. Insbesondere sind auch Flüssigkristall-Anzeigevorrichtungen, die zur Ansteuerung der Segmente eine Matrix von Dünnschichttransistoren (engl. thin film transistor, TFT) enthalten (meist als "Aktiv-Matrix-Display" bezeichnet), "Flüssigkristall-Anzeigeelemente" im Sinne der Erfindung.

Unter einem "Datenempfangsmittel" im Sinne der Erfindung ist eine Vorrichtung zu verstehen, die in der Lage ist, Signale zu empfangen, denen Daten aufgeprägt sind, und diese Daten dem Signal zu entnehmen, um sie für eine Weiterverarbeitung oder -verwendung oder eine Speicherung zur Verfügung zu stellen. Bei einem Datenempfangsmittel kann es sich insbesondere um einen Funkempfänger handeln, mittels dessen drahtlos Daten bzw. solche tragende Signale empfangen werden können. Auch drahtgebundene Empfänger, etwa Ethernet-Empfänger, sind Datenempfangsmittel im Sinne der Erfindung. Datenempfangsmittel können insbesondere einen oder mehrere Prozessoren, insbesondere Graphikprozessoren, und/oder Daten bzw. Programmspeicher enthalten.

Unter einem "lichtdurchlässigen Substrat" im Sinne der Erfindung ist ein Träger aus einem zumindest in Teilen des sichtbaren elektromagnetischen Spektrums transparenten Material zu verstehen. Das Substrat kann insbesondere im Wesentlichen plattenförmig sein und sowohl aus anorganischem Material (z.B. Glas) oder aus organischem Material (z.B. Plexiglas) oder aus beidem bestehen. Substrate im Sinne der Erfindung können insbesondere auch mehrere gleiche oder unterschiedliche Schichten enthalten.

Mittels der erfindungsgemäßen Anzeigevorrichtung wird eine durch die Substrate geschützte und somit robuste Anzeige bereitgestellt, die zudem aufgrund ihrer Integration in die Substrate so gut wie keinen zusätzlichen Platzbedarf erfordert. Zudem wird dadurch eine zweiseitige Anzeige von Informationen, die sich zu einem gegebenen Zeitpunkt auch unterscheiden können, ermöglicht, so dass der effektive Sichtbereich erweitert wird und insbesondere auch eine zweiseitige Anzeige auf einander gegenüberliegenden Seiten der Anzeigevorrichtungen ermöglicht wird. Die Aufgabe wird somit gelöst.

Nachfolgend werden bevorzugte Ausführungsformen der Anzeigevorrichtung und deren Weiterbildungen beschrieben, die jeweils, soweit dies nicht ausdrücklich ausgeschlossen wird, beliebig miteinander sowie mit den im Weiteren beschriebenen anderen Aspekten der Erfindung kombiniert werden können.

Gemäß einer ersten bevorzugten Ausführungsform weist die Lichtquelle der Anzeigevorrichtung wenigstens eine organische Leuchtdiode, OLED, auf. Dies kann insbesondere den Vorteil bringen, dass die OLEDs gegenüber herkömmlichen anorganischen LEDs deutlich dünner und auch flexibel ausgebildet werden können und auch drucktechnisch auf einen Träger, insbesondere auf eines der Substrate, aufgebracht werden können. Somit lassen sich sehr dünne Anzeigevorrichtungen realisieren, die zudem auch nicht-planar, insbesondere gebogen sein können.

Gemäß einer weiteren bevorzugten Ausführungsform ist der Hohlraum zumindest teilweise als eine Aussparung in wenigstens einem der Substrate ausgebildet. Insbesondere kann die Aussparung nur in einem der Substrate oder in beiden Substraten vorgesehen sein. Auf diese Weise ist es möglich, den Gesamtaufbau der Anzeigevorrichtung sehr dünn zu gestalten, da das Anzeigemodul zumindest teilweise, bevorzugt jedoch vollständig in den Hohlraum aufgenommen werden kann und somit keine oder jedenfalls nur eine geringere Aufbauhöhe für sich beansprucht. Wenn die Anzeigevorrichtung vollständig in den Hohlraum aufgenommen ist, können zudem die beiden Substrate unmittelbar miteinander verbunden werden, ohne dass es einer zusätzlichen Zwischenschicht zum Höhenausgleich bedarf.

Gemäß einer weiteren bevorzugten Ausführungsform weist die Anzeigevorrichtung des Weiteren ein drittes Substrat auf, das zwischen dem ersten und dem zweiten Substrat angeordnet ist und mittels dessen beide verbunden sind, wobei der Hohlraum, zumindest teilweise, als Aussparung in dem dritten Substrat ausgebildet ist. Diese Ausführungsform kann auch in Kombination mit der unmittelbar vorausgehend beschriebenen Ausführungsform verwendet werden, wenn bei dieser die Anzeigevorrichtung nur teilweise in einem durch wenigstens eines der Substrate gebildeten Hohlraum angeordnet ist. Die Hinzunahme des dritten Substrats kann insbesondere dann vorteilhaft sein, wenn das erste und/oder zweite Substrat, beispielsweise wegen seiner jeweiligen optischen Eigenschaften, nur mit geringer Dicke ausgeführt werden soll, so dass das Anzeigemodul nicht vollständig in einem in wenigstens einem der Substrate ausgebildeten Hohlraum untergebracht werden kann. Auch kann das dritte Substrat mit geringerer oder keiner Lichttransparenz oder farbig ausgeführt sein, da der Strahlengang des von dem Anzeigemodul ausgesandten Lichts nicht durch das dritte Substrat verlaufen muss. Somit ist eine einfache Integration des Anzeigemoduls in nicht-transparente oder farbige Substrate, insbesondere Wände, Stelen usw. möglich. Das dritte Substrat kann selbst auch heterogen aufgebaut sein und insbesondere mehrere Schichten aufweisen (z.B. Verbundplatte).

Gemäß einer weiteren bevorzugten Ausführungsform weist wenigstens eines der beiden Substrate eine Glasscheibe auf bzw. ist als eine solche ausgebildet. Dies kann insbesondere im Hinblick auf die Härte und Robustheit der Glasoberfläche sowie die auch über lange Zeiträume hinweg praktisch unverändert hohe Lichttransparenz von Gläsern gegenüber beispielsweise vielen organischen Substraten vorteilhaft sein. Zudem lassen sich aus Glasscheiben auch leicht stabile Wände, Raumteiler, Stelen und ähnliches fertigen, in denen ein Anzeigemodul eingebracht werden kann, um die erfindungsgemäße Anzeigevorrichtung zu bilden.

Gemäß einer weiteren bevorzugten Ausführungsform ist die Verbindung zwischen zumindest zwei benachbarten der Substrate mittels einer Verklebung ausgeführt. Die zumindest zwei Substrate können dabei je nach Ausführungsform insbesondere das erste und das zweite Substrat sein, wenn wenigstens eines davon einen Hohlraum aufweist bzw. beide zusammen einen Hohlraum bilden, der groß genug ist, das Anzeigemodul aufzunehmen. Die Anzeigevorrichtung kann in diesem Fall dadurch gebildet sein, dass das Anzeigemodul in den Hohlraum eingebracht und-wahlweise - zusätzlich befestigt wird und sodann die beiden Substrate miteinander, insbesondere flächig, verklebt werden. Auf diese Weise kann eine besonders robuste Anzeigevorrichtung bereitgestellt werden, bei der sich die beiden Substrate aufgrund ihrer Verbindung miteinander gegenseitig verstärken. In einer anderen Variante, bei der ein drittes Substrat vorgesehen ist, können eine oder mehrere Klebeverbindungen auch zwischen dem dritten Substrat und wenigstens einem der anderen Substrate (erstes oder zweites Substrat oder beide) vorliegen. Insbesondere kann dabei die folgende Schichtenfolge vorliegen: erstes Substrat - Klebeschichtdrittes Substrat mit Anzeigemodul in einem Hohlraum bzw. einer Aussparung darin - Klebeschicht - zweites Substrat. Zusätzlich können an den Schichtgrenzen noch elektrische Leiter vorgesehen sein, um das Anzeigemodul mit Energie oder Informationen bzw. Daten zu versorgen.

In einer besonders bevorzugten Variante dieser Ausführungsform ist die Verklebung mittels einer Folie als Zwischenschicht ausgeführt, so dass die verklebten Substrate zusammen mit der dazwischen liegenden Folie eine Verbundsicherheitsscheibe bilden. Auf diese Weise kann die Robustheit der Anzeigevorrichtung noch dadurch ergänzt werden, dass - wie etwa bei einer Windschutzscheibe eines Kraftfahrzeugs - im Falle einer Zerstörung eines oder mehrerer der Substrate wie sie beispielsweise bei einer sehr starken mechanischen Einwirkung auftreten kann, der Zusammenhalt der Substrattrümmer weitgehend erhalten bleibt und sich so der Bildung von Scherben oder anderen gefährlichen Fragmenten entgegenwirken lässt.

Gemäß einer weiteren bevorzugten Ausführungsform weist wenigstens eines der Substrate auf seiner einem benachbarten Substrat zugewandten Seite eine elektrisch leitfähige Schicht auf, die angeordnet ist, um elektrische Energie oder Daten oder beides an das Anzeigemodul zu übertragen. Insbesondere kann die leitfähige Schicht zumindest zwei elektrisch getrennte Teilbereiche enthalten, von denen wenigstens ein erster zur Energieübertragung und wenigstens ein zweiter zur Datenübertragung an das Anzeigemodul angeordnet ist.

In einer besonders bevorzugten Variante dieser Ausführungsform ist die leitfähige Schicht aus einem lichtdurchlässigen, elektrisch leitfähigen Material, wie etwa Indium-Zinn-Oxid (ITO) gebildet. Andere geeignete Materialien sind:
- SnO₂:F, mit Fluor dotiertes Zinn(IV)-oxid (engl. Fluorine Tin Oxide, FTO),
- ZnO:Al, mit Aluminium dotiertes Zinkoxid (engl. Aluminum Zinc Oxide, AZO)
- SnO₂:Sb, mit Antimon dotiertes Zinn(IV)-oxid (engl. Antimony Tin Oxide, ATO) oder
- Graphen.

Mit Hilfe solcher transparenter elektrisch leitfähiger Materialien oder auch Mischungen oder Kombinationen daraus lässt sich eine transparente Zuführung von Energie oder Informationen zum Anzeigemodul bewerkstelligen, die vom Betrachter kaum wahrgenommen wird und somit nicht als optisch störend empfunden wird, wenn die Substrate selbst lichtdurchlässig sind. Besonders bevorzugt sind solche Zuleitungen als Dünnschicht auf eines oder mehrere der Substrate aufgebracht, insbesondere aufgedampft oder auf anderem Wege abgeschieden. Auf diese Weise wird die Dicke der gesamten Anzeigevorrichtung - wenn überhaupt - nur unwesentlich beeinflusst.

Gemäß einer weiteren bevorzugten Ausführungsform weisen die Datenempfangsmittel eine Empfangsvorrichtung zur drahtlosen Kommunikation auf, mittels der das Anzeigemodul drahtlos anzuzeigende Informationen oder Steuerdaten oder beides empfangen kann. Die drahtlose Kommunikation kann insbesondere auf Basis eines bekannten Kommunikationsstandards wie etwa Bluetooth® oder Wireless LAN (WLAN bzw. WiFi) beruhen. Auf diese Weise können zumindest Datenzuleitungen entfallen. In einigen Varianten kann zudem die Energieversorgung des Anzeigemoduls so ausgebildet sein, dass elektrische Zuleitungen zum Anzeigemodul ganz entfallen können. Dies ist etwa der Fall, wenn das Anzeigemodul selbst über eine Batterieversorgung oder über eine photovoltaische Energieversorgung verfügt. Selbst Energieversorgungen, die zumindest teilweise auf einem sogenannten "Energy-Harvesting", also dem Abschöpfen von Energie aus Quellen wie Umgebungstemperatur, Vibrationen, Luftströmungen oder elektromagnetischer Strahlung, beruhen, sind vorstellbar.

Gemäß einer weiteren bevorzugten Ausführungsform ist die Lichtquelle zumindest teilweise lichtundurchlässig, so dass ein Lichtstrahlungsverlauf zwischen der ersten Oberfläche und der zweiten Oberfläche zumindest teilweise unterbunden ist. Auf diese Weise sind die Anzeige mit Blick auf die erste Oberfläche und die Anzeige mit Blickrichtung auf die zweite Oberfläche, d.h. die beiden Anzeigen in dem Anzeigemodul, zumindest teilweise voneinander entkoppelt, so dass einer Beeinflussung einer der Anzeigen durch die jeweils andere Anzeige entgegengewirkt werden kann, um etwa Schattenbildung zu vermeiden.

Gemäß einer weiteren bevorzugten Ausführungsform sind das erste Flüssigkristall-Anzeigeelement und das zweite Flüssigkristall-Anzeigeelement unabhängig voneinander betreibbar und können gleichzeitig verschiedene Informationen anzeigen. Auf diese Weise ist es nicht nur möglich, auf beiden Anzeigen jeweils dieselbe Information anzuzeigen, sondern auch eine inhaltliche Entkopplung der Anzeigen kann erfolgen. In einer Variante kann die Anzeigevorrichtung insbesondere eine Trennwand zwischen verschiedenen Passagierklassen in einem Personentransportmittel oder ein Teil einer solchen Trennwand sein und für jede der Passagierklassen klassenspezifische und somit unterschiedliche Informationen anzeigen.

Ein zweiter Aspekt der Erfindung betrifft ein Massentransportmittel, insbesondere ein Schienenfahrzeug wie etwa einen Zugwaggon, mit einer Anzeigevorrichtung gemäß dem ersten Aspekt der Erfindung. In einer bevorzugten Ausführungsform bildet die Anzeigevorrichtung dabei - wie schon vorausgehend erläutert - zumindest einen Teil einer Wand des Massentransportmittels.

Darüber hinaus kann die Anzeigevorrichtung gemäß weiterer Aspekte der Erfindung auch als Informationsstelle, Anzeigentafel, Werbeanzeige oder ähnliches ausgebildet sein und insbesondere für den Einsatz in öffentlichen Räumen, Plätzen, Fußgängerzonen, Einkaufspassgagen usw. vorgesehen sein.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt
- **Fig. 1**: schematisch als Explosionszeichnung den Aufbau einer Anzeigevorrichtung gemäß einer ersten bevorzugten Ausführungsform der Erfindung;
- **Fig. 2**: schematisch in einer Schnittansicht den Aufbau einer Anzeigevorrichtung gemäß einer zweiten bevorzugten Ausführungsform der Erfindung;
- **Fig. 3**: schematisch in einer Schnittansicht den Aufbau einer Anzeigevorrichtung gemäß einer dritten bevorzugten Ausführungsform der Erfindung;
- **Fig. 4**: schematisch in einer Schnittansicht den Aufbau eines Anzeigemoduls der Anzeigevorrichtung, gemäß einer bevorzugten Ausführungsform der Erfindung;
- **Fig. 5**: schematisch eine Draufsicht von oben in das Innere eines Zugewaggons gemäß einer bevorzugten Ausführungsform der Erfindung zeigt.

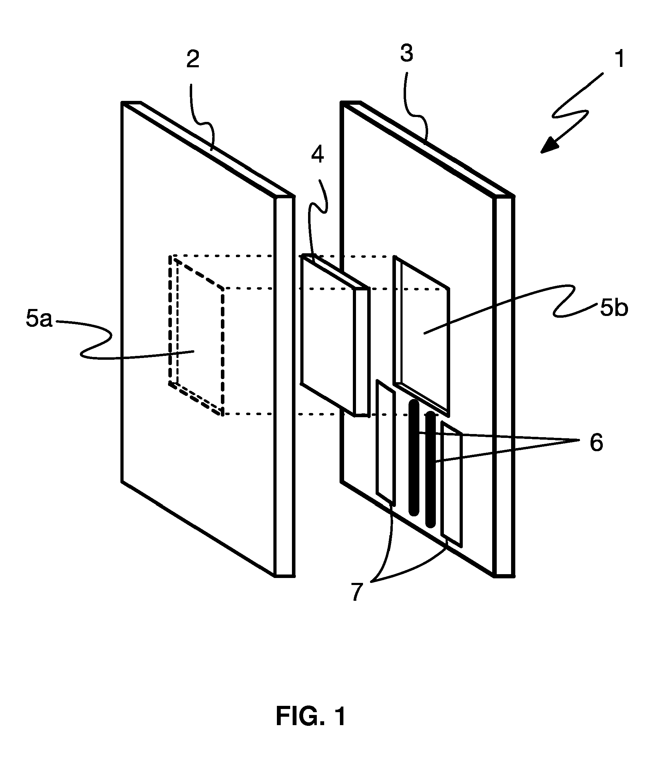

Die in **Figur 1** gezeigte Anzeigevorrichtung 1 weist zwei zueinander parallel angeordnete und jeweils als Glasscheibe oder Plexiglasscheibe ausgebildete Substrate 2 bzw. 3 auf, die jeweils auf ihrer dem anderen Substrat zugewandten Hauptfläche eine rechteckige Vertiefung 5a bzw. 5b aufweisen. Dabei liegen diese Vertiefungen 5a bzw. 5b genau gegenüber, so dass sie beim Zusammenfügen der beiden Substrate 2 und 3 an ihren einander zugewandten Hauptflächen miteinander einen rechteckigen Hohlraum bilden, in dem das Anzeigemodul 4 Platz findet. Die beiden Substrate 2 bzw. 3 sind zumindest im Bereich der Vertiefungen 5a bzw. 5b lichtdurchlässig, so dass das Anzeigemodul 4 im Bereich der Vertiefungen sowohl durch das Substrat 2 hindurch als auch durch das Substrat 3 hindurch sichtbar ist. In einigen Ausführungsformen können die gesamten Substrate 2 bzw. 3 jeweils lichtdurchlässig sein. Die elektrische Versorgung des Anzeigemoduls 4 erfolgt über eine Stromzuführung 6, die mittels zweier Kabel oder bevorzugt mittels auf wenigstens einem der beiden Substrate 2 bzw. 3 abgeschiedenen leitenden Schichten gebildet ist. In der beispielhaften Anordnung aus **Fig. 1** sind derartige leitende Schichten als Stromzuführung 6 auf dem Substrat 3 abgeschieden. Des Weiteren sind zwei weitere leitende Schichten 7 auf dem Substrat 3 abgeschieden, die dazu dienen, dem Anzeigemodul 4 Informationen bzw. Daten zur Verfügung zu stellen. Alternativ oder kumulativ, kann dies auch drahtlos über eine entsprechende Funkverbindung erfolgen. Die Schichten 6 bzw. 7 sind bevorzugt aus einem transparenten leitfähigen Material, etwa aus Indium-Zinn-Oxid (ITO), ausgebildet und so nach außen geführt, dass sie mit einer entsprechenden Stromversorgung bzw. Datenversorgung außerhalb der Anzeigevorrichtung 1 verbindbar sind. Die hier bereits im Zusammenhang mit **Fig. 1** eingeführten Bezugszeichen werden auch für die nachfolgenden weiteren Figuren beibehalten.

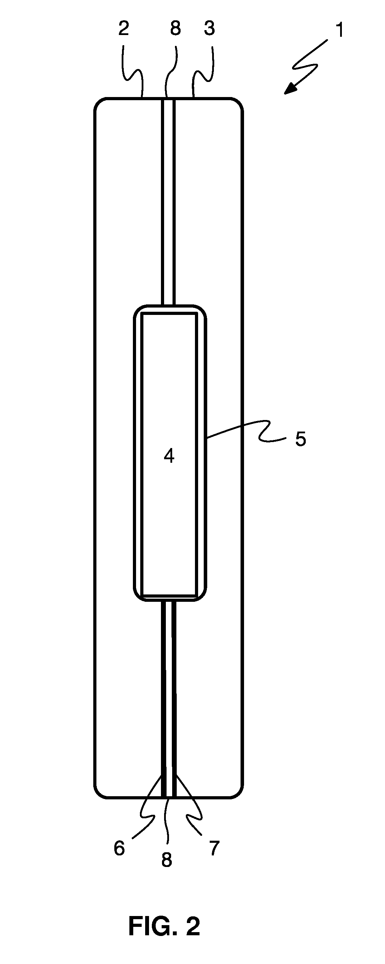

In **Fig. 2** ist eine weitere Ausführungsform der erfindungsgemäßen Anzeigevorrichtung 1 als ein senkrecht zu den Hauptflächen der Substrate 2 bzw. 3 verlaufendes Schnittbild dargestellt. Dabei sind die Substrate 2 und 3 an ihren einander zugewandten Hauptflächen miteinander mittels einer als Klebefolie ausgebildeten Klebeschicht 8 verbunden. So ergibt sich eine Verbundglasscheibe, mit einem durch die beiden Vertiefungen 5a bzw. 5b gebildeten Hohlraum 5, in dem das Anzeigemodul 4 Platz findet und angeordnet ist. Die Stromzuführung 6 und die Datenzuführung 7, die wiederum jeweils als leitende Schichten auf jeweils einem der beiden Substrate 2 bzw. 3 ausgebildet sind, sind durch die Klebeschicht 8, welche nicht leitend ist, voneinander elektrisch isoliert. Insgesamt ist die Anzeigevorrichtung 1 somit als Verbundglasscheibe mit integriertem Anzeigemodul 4 ausgebildet, wobei das Anzeigemodul von beiden Seiten der Verbundglasscheibe aus durch das jeweilige zumindest im Bereich der Anzeigevorrichtung 4 lichtdurchlässige Substrat 2 bzw. 3 hindurch betrachtet werden kann.

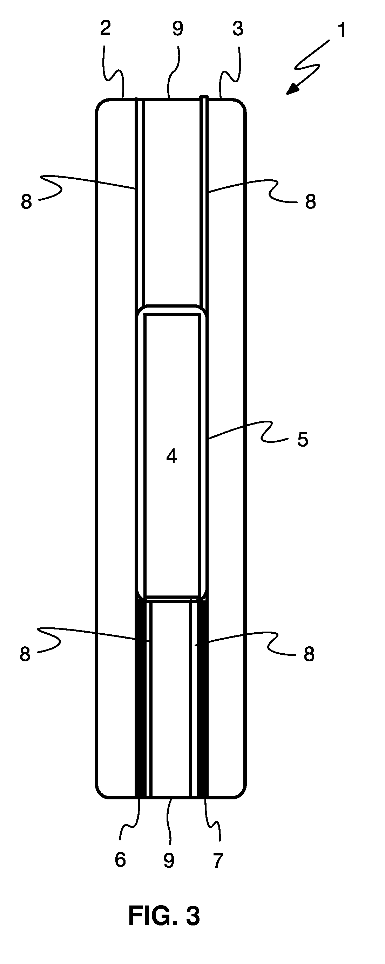

In **Fig. 3** ist eine weitere Ausführungsform der erfindungsgemäßen Anzeigevorrichtung 1, wiederum als Schnittbild, gezeigt. Im Unterschied zur Ausführungsform aus **Fig. 2** ist hier zusätzlich ein drittes Substrat 9 vorgesehen, welches zwischen dem ersten Substrat 2 und dem zweiten Substrat 3 angeordnet ist, und eine Aussparung bzw. einen Hohlraum 5 aufweist, in dem das Anzeigemodul 4 Platz findet und angeordnet ist. In einer nicht gezeigten Variante davon kann der Hohlraum 5 zusätzlich durch entsprechende Vertiefungen 5a bzw. 5b in den beiden Substraten 2 bzw. 3 vergrößert werden, wodurch eine verringerte Dicke der Verbundglasscheibe erreichbar ist. Das Substrat 9 kann ebenso eine Glasscheibe sein, aber auch aus jedem anderen geeigneten Material gebildet sein. Insbesondere kann das dritte Substrat 9 wahlweise aus einem transparenten oder einem nicht transparenten Material gefertigt sein und selbst aus mehrere Schichten bestehen. Ähnlich wie in **Fig. 2** sind wieder eine Stromzuführung 6 bzw. eine Datenzuführung 7 mittels auf dem Substrat 2 bzw. 3 aufgebrachter leitender Schichten vorgesehen. Selbstverständlich ist auch hier, wie in den **Figuren 1** **und** **2****,** auch eine drahtlose Datenübertragung anstelle einer leitergebundenen Datenübertragung möglich. Die drei Substrate 2, 3 und 9 sind an ihren Berührungsflächen wieder über entsprechende Klebeschichten 8 miteinander verbunden. Dabei können zumindest eine, bevorzugt aber alle diese Klebeschichten wiederum als Klebefolie ausgebildet sein.

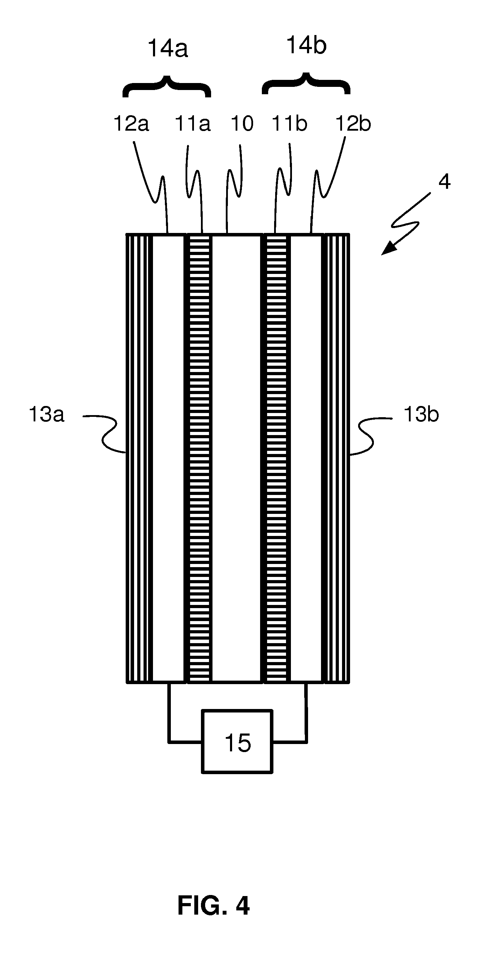

Eine Detailansicht einer beispielhaften Ausführung des Anzeigemoduls 4 ist in **Fig. 4** schematisch als Schnittbild dargestellt. Dabei handelt es sich um einen Stapelaufbau aus mehreren Schichten, mit einer zentralen Schicht 10, die eine flächenförmige Lichtquelle darstellt. Die Lichtquelle 10 kann insbesondere eine oder mehrere Leuchtdioden, besonders bevorzugt eine oder mehrere organische Leuchtdioden (OLED) aufweisen. Sie strahlt Licht sowohl auf ihrer linken als auch auf ihrer rechten Hauptfläche, jeweils in Richtung des darüber befindlichen Stapelaufbaus, ab. Im Stapelaufbau folgt von innen nach außen verlaufend auf die Lichtquelle 10 beidseitig jeweils ein erster Polarisationsfilter 11a bzw. 11 b mit einer ersten Polarisationsrichtung, eine Flüssigkristallschicht mit einer Mehrzahl, insbesondere einer Matrix aus Anzeigesegmenten (z.B. Pixel), sowie ein relativ zum ersten Polarisationsfilter gekreuzter zweiter Polarisationsfilter, der bevorzugt eine um 90° gegenüber der ersten Polarisationsrichtung gedrehte zweiten Polarisationsrichtung aufweist. Dabei sind die Polarisationsfilter jeweils als dünne Schichten auf Glassubstraten abgeschieden. Diese Glassubstrate tragen außerdem die Ansteuerung der Segmente der Flüssigkristallschichten, insbesondere in Form einer sogenannten TFT-Matrix. Insofern entsprechen der linke Teilstapel mit den Schichten 11a, 12a und 13a sowie der rechte Teilstapel mit den Schichten 11 b, 12b und 13b jeweils bekannten Flüssigkristall-Anzeigeelementen 14a bzw. 14b, wobei hier jedoch die Lichtquelle 10 als gemeinsame Hintergrundbeleuchtung für beide Flüssigkristall-Anzeigeelemente 14a bzw. 14b dient. Daneben weist das Anzeigemodul 4 noch einen Datenempfänger 16 zum Empfang von anzuzeigenden Informationen oder Steuersignalen für das Anzeigemodul 4 auf.

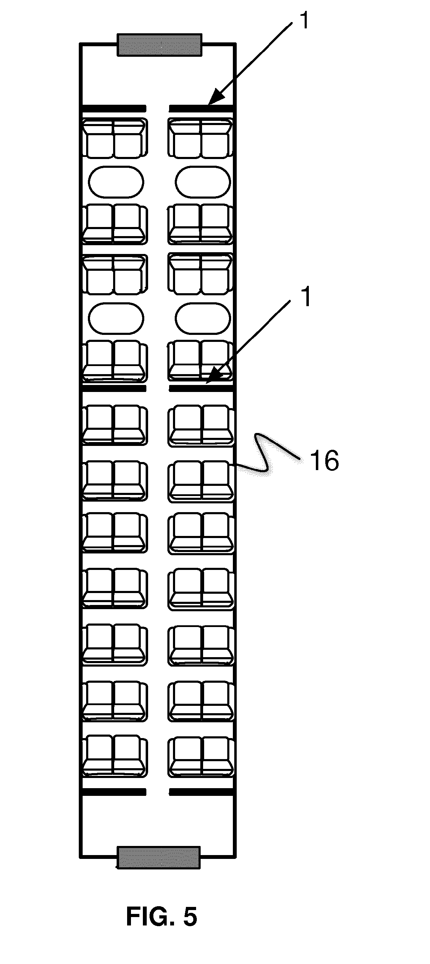

In **Fig. 5** sind schließlich schematisch zwei erfindungsgemäße Anzeigevorrichtungen 1 gezeigt, die jeweils als eine Trennwand bzw. als Raumteiler in einem Zugwaggon 16 eines Personenzuges ausgebildet sind und die beidseitige Anzeige von Informationen, wie etwa der aktuellen Zuggeschwindigkeit oder von Umsteigemöglichkeiten am nächsten Bahnhof ermöglichen.

Während vorausgehend wenigstens eine beispielhafte Ausführungsform beschrieben wurde, ist zu bemerken, dass eine große Anzahl von Variationen dazu existiert.

Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### Bezugszeichenliste

- 1: Anzeigevorrichtung
- 2: erstes Substrat
- 3: zweites Substrat
- 4: Anzeigemodul
- 5: Hohlraum
- 5a, b: Vertiefungen
- 6: leitende Schicht zur Stromzuführung
- 7: leitende Schicht zur Datenzuführung
- 8: Klebeschicht
- 9: drittes Substrat
- 10: Lichtquelle
- 11a,b: Polarisationsfilter
- 12a,b: Flüssigkristallschicht
- 13 a,b,: Polarisationsfilter
- 14a, 14b: Flüssigkristall-Anzeigeelemente
- 15: Datenempfänger
- 16: Zugwaggon mit Anzeigevorrichtungen

## Patentansprüche

1. Anzeigevorrichtung (1), insbesondere Bildschirm zur Informationsanzeige in einem Personentransportmittel (16), aufweisend:
ein Anzeigemodul (4) mit:
- einer flächenförmigen Lichtquelle (10) mit einer ersten Oberfläche und einer zweiten, der ersten Oberfläche gegenüberliegenden Oberfläche, wobei die Lichtquelle (10) eingerichtet ist, sowohl an der ersten Oberfläche als auch an der zweiten Oberfläche Licht zu emittieren;
- einem ersten Flüssigkristall-Anzeigeelement (14a), das auf der Seite der ersten Oberfläche der Lichtquelle (10) so angeordnet ist, dass das von der ersten Oberfläche emittierte Licht als Hintergrundbeleuchtung des ersten Flüssigkristall-Anzeigeelements (14a) dient; und
- einem zweiten Flüssigkristall-Anzeigeelement (14b), das auf der Seite der zweiten Oberfläche der Lichtquelle (10) so angeordnet ist, dass das von der zweiten Oberfläche emittierte Licht als Hintergrundbeleuchtung des zweiten Flüssigkristall-Anzeigeelements (14b) dient;
- Datenempfangsmitteln (15) zum Empfang von mittels wenigstens eines der Flüssigkristall-Anzeigeelemente (14a, 14b) anzuzeigenden Informationen oder von Steuerdaten oder beidem;
ein erstes lichtdurchlässiges Substrat (2); und
ein zweites lichtdurchlässiges Substrat (3);
wobei das erste Substrat (2) und das zweite Substrat (3) so miteinander verbunden sind, dass das Anzeigemodul (4) dazwischen in einem Hohlraum (5) angeordnet ist.

2. Anzeigevorrichtung (1) gemäß Anspruch 1, wobei die Lichtquelle (10) wenigstens eine organische Leuchtdiode, OLED, aufweist.

3. Anzeigevorrichtung (1) einem der vorausgehenden Ansprüche, wobei der Hohlraum (5) zumindest teilweise als eine Aussparung (5a, 5b) in wenigstens einem der Substrate (2, 3) ausgebildet ist.

4. Anzeigevorrichtung (1) gemäß einem der vorausgehenden Ansprüche, wobei die Anzeigevorrichtung (1) des Weiteren ein drittes Substrat (9) aufweist, das zwischen dem ersten (2) und dem zweiten Substrat (3) angeordnet ist und mittels dessen beide verbunden sind, wobei der Hohlraum (5), zumindest teilweise, als Aussparung in dem dritten Substrat (9) ausgebildet ist.

5. Anzeigevorrichtung (1) gemäß einem der vorausgehenden Ansprüche, wobei wenigstens eines der beiden Substrate (2,3) eine Glasscheibe aufweist.

6. Anzeigevorrichtung (1) gemäß einem der vorausgehenden Ansprüche, wobei die Verbindung zwischen zumindest zwei benachbarten der Substrate (2, 3) mittels einer Verklebung (8) ausgeführt ist.

7. Anzeigevorrichtung (1) gemäß Anspruch 5, wobei die Verklebung (8) mittels einer Folie als Zwischenschicht ausgeführt ist, so dass die verklebten Substrate (2, 3) zusammen mit der dazwischen liegenden Folie eine Verbundsicherheitsscheibe bilden.

8. Anzeigevorrichtung (1) gemäß einem der vorausgehenden Ansprüche, wobei wenigstens eines der Substrate (2, 3) auf seiner einem benachbarten Substrat (3, 2) zugewandten Seite eine elektrisch leitfähige Schicht (6, 7) aufweist, die angeordnet ist, um darüber elektrische Energie oder Daten oder beides an das Anzeigemodul (4) zu übertragen.

9. Anzeigevorrichtung (1) gemäß Anspruch 8, wobei die leitfähige Schicht (6, 7) aus einem lichtdurchlässigen, elektrisch leitfähigen Material gebildet ist.

10. Anzeigevorrichtung (1) gemäß Anspruch 8 oder 9, wobei die leitfähige Schicht (6, 7) zumindest zwei elektrisch getrennte Teilbereiche enthält, von denen wenigstens ein erster (6) zur Energieübertragung und wenigstens ein zweiter (7) zur Datenübertragung an das Anzeigemodul (4) angeordnet ist.

11. Anzeigevorrichtung (1) gemäß einem der vorausgehenden Ansprüche, wobei die Datenempfangsmittel (15) eine Empfangsvorrichtung zur drahtlosen Kommunikation aufweisen, mittels der das Anzeigemodul (4) drahtlos anzuzeigende Informationen oder Steuerdaten oder beides empfangen kann.

12. Anzeigevorrichtung (1) gemäß einem der vorausgehenden Ansprüche, wobei die Lichtquelle (10) zumindest teilweise lichtundurchlässig ist, so dass ein Lichtstrahlungsverlauf zwischen der ersten Oberfläche und der zweiten Oberfläche zumindest teilweise unterbunden ist.

13. Anzeigevorrichtung (1) gemäß einem der vorausgehenden Ansprüche, wobei das erste Flüssigkristall-Anzeigeelement (14a) und das zweite Flüssigkristall-Anzeigeelement (14b) unabhängig voneinander betreibbar sind und gleichzeitig verschiedene Informationen anzeigen können.

14. Massentransportmittel (16), insbesondere Schienenfahrzeug, mit einer Anzeigevorrichtung (1) gemäß einem der vorausgehenden Ansprüche.

15. Massentransportmittel (16) gemäß Anspruch 14, wobei die Anzeigevorrichtung (1) zumindest einen Teil einer Wand des Massentransportmittels (16) bildet.
